(19) Europäisches Patentamt
European Patent Office
Office européen des brevets

(11) **EP 0 739 591 B1**

(12) **EUROPEAN PATENT SPECIFICATION**

(45) Date of publication and mention
of the grant of the patent:
**13.06.2001 Bulletin 2001/24**

(51) Int Cl.⁷: **A23D 9/00**, C11C 3/00,
A23L 1/30

(21) Application number: **96201020.3**

(22) Date of filing: **16.04.1996**

(54) **Triglycerides rich in polyunsaturated fatty acids**

An polyungesättigten Fettsäuren reiche Triglyceride

Triglycérides riches en acides gras polyinsaturés

(84) Designated Contracting States:
**AT BE CH DE DK ES FR GB GR IE IT LI NL PT SE**

(30) Priority: **28.04.1995 EP 95302944**

(43) Date of publication of application:
**30.10.1996 Bulletin 1996/44**

(73) Proprietor: **LODERS CROKLAAN B.V.**
**1521 AX Wormerveer (NL)**

(72) Inventors:
• **Cain, Frederick William**
**2271 VL Voorburg (NL)**
• **McNeill, Gerald Patrick**
**Rushden NN10 9LZ (GB)**
• **Moore, Stephen Raymond**
**Thrapston, Northamptonshire (GB)**

(74) Representative: **Sikken, Antonius H. J. M. et al**
**UNILEVER N.V.,**
**Patent Division,**
**P.O. Box 137**
**3130 AC Vlaardingen (NL)**

(56) References cited:
EP-A- 0 265 699          EP-A- 0 271 909
EP-A- 0 298 293          EP-A- 0 321 777
EP-A- 0 609 001          WO-A-94/24889
US-A- 5 151 291

• PATENT ABSTRACTS OF JAPAN vol. 17, no. 429
(C-1095), 10 August 1993 & JP-A-05 095792
(AGENCY OF IND SCIENCE & TECHNOL), 20
April 1993,

• BIOSCIENCE BIOTECHNOLOGY
BIOCHEMISTRY, vol. 57, no. 12, 1993, TOKYO
JP, pages 2202-2204, XP002010233 Y. ENDO ET
AL.: "Retarded autoxidation of sardine oil with
oleate"
• JOURNAL OF THE AMERICAN OIL CHEMISTS'
SOCIETY, vol. 71, no. 11, 1994, CHAMPAIGN US,
pages 1277-1280, XP002010234 KUAN-HSIANG
HUANG ET AL.: "Lipase-catalyzed incorporation
of n-3 polyunsaturated fatty acids into vegetable
oils"
• JOURNAL OF THE JAPAN OIL CHEMISTS'
SOCIETY, vol. 42, no. 1, 1993, JP, pages 30-35,
XP002010235 T. TOYOSHIMA ET AL.:
"Preparation of polyunsaturated triacylglycerols
via transesterification catalysed by immobilized
lipase"
• JOURNAL OF FERMENTATION AND
BIOENGINEERING, vol. 75, no. 4, 1993, pages
259-264, XP002010236 S. ADACHI ET AL.:
"Acidolysis of sardine oil by lipase to
concentrate eicosapentaenoic and
docosahexaenoic acids in glycerides"
• JOURNAL OF THE AMERICAN OIL CHEMISTS'
SOCIETY, vol. 71, no. 3, 1994, CHAMPAIGN US,
pages 331-334, XP002010237 YUKIHISA
TANAKA ET AL.: "Synthesis of
docosahexaenoic acid-rich triglyceride with
immobilized Chromobacterium viscosum
lipase"
• JOURNAL OF THE AMERICAN OIL CHEMISTS'
SOCIETY, vol. 72, no. 2, 1995, CHAMPAIGN US,
pages 239-243, XP002010238 S.B. PEDERSEN
ET AL.: "Studies of the fatty acid specificity of
the lipase from Rhizomucor miehei toward
20:1n-9, 20:5n-3, 22:1n-9 and 22:6n-3"

EP 0 739 591 B1

## Description

According to EP 265 699 fats with a superior digestibility and absorptivity are obtained, when these fats are composed of triglycerides having a specific amount of $C_8$ to $C_{14}$ fatty acid residues at the 2-position, while residues with $C_{18}$ or higher fatty acids are bonded at the 1.3-positions. Typical examples of the $C_{18}$ and higher fatty acids are polyunsaturated fatty acids, such as arachidonic acid, eicosapentenoic acid and dodecahexenoic acid. However nothing is disclosed about fat compositions that combine in the fat saturated fatty acid residues and at least two different long chain polyunsaturated fatty acid residues and that have structering properties. In WO 90/04012 it is disclosed that triglycerides that contain saturated $C_8/C_{10}$ fatty acid residues in 1.3 and simultaneously a polyunsaturated fatty acid residue (in particular DHA) in the 2-position, have beneficial nutritional properties, in particular for enteral or parenteral purposes. However again, nothing is disclosed about fat compositions that contain in the fat specific amounts of saturated and two different polyunsaturated fatty acid residues and that have structering properties.

From WO 95/06414 it is known that fatblends that contain unhardened fish oil have significant health benefits. Fish oil often contains appreciable amounts of two different polyunsaturated fatty acids, e.g. DHA and EPA. However it is also known that fish oil has a number of draw backs. A particular disadvantage of fish oils being that they do not have structuring properties, which makes it difficult to apply them in fat compositions wherein a structuring agent is required in order to give the fat composition a performance, that is desired to make the fat applicable in foodproducts.

Toyoshima c.s. disclosed in Journ. of the Japan Oil chem Soc 42 (11), 1993, pages 30-35 a transesterification process, applying Mucor miehei as enzyme of a fish oil, such as sardine oil, EPA concentrated oil or DHA concentrated oil with polyunsaturated fatty acids. This resulted in triglycerides with about 62 % of PUFA in it. It is further disclosed that EPA was incorporated more easily than DHA. Therefore triglycerides high in DHA were made by an additional transesterification in the fish oil/PUFA system. This document therefore does not disclose triglycerides rich in a first LCPUFA and containing a second LCPUFA in a weight ratio of > 2, which triglycerides further contain saturated $C_{14+}$ fatty acids.

Endo in Bioscience Biotechn Biochem 57 (12) 1993, pages 2202-2204 discloses that sardine oil can be stabilized by interesterification with saturated or mono-unsaturated fatty acids. However, the effects with stearic acid are very low. As a result of the enzymic interesterification the total amount of LCPUFA in sardine oil (was 20 %) decreased to 17.5 wt % if stearic acid groups were introduced. Therefore, this document does not teach triglycerides rich in a first LCPUFA and also containing a second LCPUFA in a ratio of > 2, while also at least 15 wt% $C_{14+}$ saturated fatty acids were present in the triglycerides.

From US 5,151,291 can be concluded that triglycerides, rich in EPA with good properties to make them suitable for margarine applications can be obtained by a process wherein EPA-ester is converted with a "higher fatty acid" triglyceride. Higher fatty acid triglycerides are defined as saturated or unsaturated $C_{14+}$ fatty acid triglyceride.

They include palmitic, stearic but also oleic, linoleic, EPA and DHA. However, this method will never result in triglycerides containing two different LCPUFA's in a ratio of > 2, while simultaneously saturated $C_{14+}$ fatty acid will be present. Moreover this document does not disclose the impact of the $C_{18:0}/C_{16:0}$-ratio in the products on the structurering properties of the fats.

EP 271,909 discloses triglycerides, wherein simultaneously three different fatty acid residues are present. These residues are selected from $C_{20}$ - $C_{22}$ saturated or (poly)unsaturated fatty acids; $C_{14}$ - $C_{18}$ saturated or unsaturated fatty acids and $C_6$ - $C_{12}$ saturated or unsaturated fatty acids. The products never comprise two different LCPUFA's in a ratio of > 2 in combination with > 15 wt % saturated $C_{14+}$ fatty acid.

We have performed a study to find out, whether fat compositions existed, that could overcome the draw backs of the known fat compositions, while they would retain the beneficial effects of the presence of relatively high amounts of polyunsaturated fatty acids. This study has resulted in the finding of novel fats, that combine the following beneficial product properties:

- our novel fats display an oxidation stability which is not lower than for known triglycerides with similar compositions, but not having our levels of specific saturated fatty acids present;

- our novel fats are better for the development of the brain, in particular when consumed by infants. This effect is due to the relatively high levels of dodecahexenoic acid (DHA) in our fats;

- our novel fats also can contain relatively high levels of eicosapentenoic acid (EPA), which makes our fats healthier, due to the effect of EPA on coronary diseases;

- our novel fats, containing $C_{16}/C_{18}$ saturated fatty acids in our specific ratio's display better flavour characteristics than the fats containing $C_{14}$ saturated fatty acids; this is due to the fact that $C_{14}$ leads to a faster hydrolysis and thus to the development of a quicker off-taste than $C_{16}/C_{18}$;

- our novel fats, containing relating high levels of $C_{18}$ saturated fatty acid residues, display a lower calorific behaviour. This is due to the fact that $C_{18}$ saturated fatty acid, displays a reduced fat absorption by the body and thus displays a decreased digestibility. This is also the reason why the fats, based on $C_{18}$ saturated fatty acids are healthier than the fats based on $C_{14}$ or $C_{16}$ saturated fatty acids.

- our fats, based on $C_{18}$-saturated fatty acids will also be healthier due to cholesterol lowering effects over $C_{14}$ and $C_{16}$ acids;

- our novel fats with the specific $C_{18:0}/C_{16:0}$ display better structuring properties than fats with lower levels of $C_{18:0}$ and higher levels of $C_{16:0}$;

- our novel fats can be obtained as a result of interesterification reactions, in particular enzymic interesterification, which results in fats with a better triglyceride-distribution than known fats. Simultaneously these fats will display an improved melting behaviour as our fats will hardly contain any trisaturated triglycerides.

So our invention concerns with novel fats, that display one or more of above beneficial effects. Our novel fats can be described as a triglyceride-composition, comprising at least two long chain poly-unsaturated fatty acids $L_1$ and $L_2$, both having at least 3 unsaturations and having at least 20 carbon atoms from which $L_1$ is the most abundant and $L_2$ is the second most abundant, wherein the triglyceride composition contains at least 20 wt% of $L_1$, while the weight ratio $L_1:L_2$ is at least 2, and the triglyceride composition also contains at least 15 wt%, of saturated fatty acids with 14 or more carbon atoms, and wherein the weight ratio $C_{18:0}$: $C_{16:0}$ is > 2, whereas at least 5 wt%, preferably at least 10 wt%, most preferably at least 20 wt% of the saturated $C_{14}$+ fatty acid residues is bonded on a triglyceride molecule, wherein at least $L_1$ and/or $L_2$ is present.

Preferred fats are triglyceride compositions according to claim 1, wherein the amount of $L_1$ is more than 30 wt%, while the weight ratio $L_1:L_2$ is at least 3, while triglyceride compositions according to claims 1 or 2, wherein the amount of $L_1$ is at least 40 wt% and the weight ratio of $L_1:L_2$ is at least 3.5 are even more preferred.

The amount of saturated $C_{14+}$ fatty acids in our fats is preferably 15-50 wt%. It was found, that fats with relatively high levels of $C_{16}$-$C_{18}$ saturated fatty acids could be obtained. Advantageously the level of $C_{16}$ -$C_{18}$ saturated fatty acids is more than 30 wt%, in particular more than 40 wt% if a good structuring fat is desired. If a healthier structuring fat is desired with better structering properties the amount of $C_{18}$ saturated fatty acid is more than 20 wt%, preferably more than 30 wt%.

Fats with the best structuring properties and health charateristics are obtained if the weight ratio of saturated $C_{18}$ : saturated $C_{16}$ fatty acid residues is > 2.

The most abundant polyunsaturated fatty acid $L_1$ is preferably DHA (= $C_{22:6}$). The second most abundant polyunsaturated fatty acid $L_2$ advantageously is EPA ($C_{20:5}$). Very useful triglycerides are obtained, when $L_1$ = EPA and $L_2$ = DHA.

Our triglycerides can be applied as such in foodproducts, however it can also be very suitable to blend our novel fats first, before applying them. Therefore part of our invention is also a blend of triglycerides, comprising

| 0.3 - 95 wt% | of triglycerides according to claims 1 - 9, and |
|---|---|
| 99.7 - 5 wt% | of a complementary fat, having a solid fat index at 10°C ($N_{10}$) that is either at least 5% more, or at least 5% less than the $N_{10}$ of the triglycerides according to claims 1 - 9. |

Above blends suitably can be composed of 5-80 wt%, in particular 20-70 wt% of the triglycerides according to claims 1 - 9, and 95-20 wt%, in particular 80-30 wt% of the complementary fat.

Many types of complementary fat could be applied. However we prefer to use a complementary fat that has a solid fat content (NMR-pulse; not stabilized) of more than 15 at 20°C, preferably more than 20.

Very useful complementary fats for our blends can be selected from cocoa butter equivalents, cocoa butter, palm oil or fractions thereof, palmkernel oil or fractions thereof, interesterified mixtures of above fats or fractions or hardened components thereof, or from liquid oils, such as sunflower oil, high oleic sunflower oil, soyabean oil, rapeseed oil, cottonseed oil, safflower oil, high oleic safflower oil, maize oil, MCT oils, or fish oils.

The blends so obtained display a solid fat content (NMR-pulse; not stabilized) of 0-85, preferably 10- 70, most preferably 20 - 60 at 5°C and less than 30, preferably < 20, most preferably < 5 at 35°C.

Although our fats already have acceptable oxydative stability we found that this stability can be further improved when our blends contain an effective amount of an oxidation stabilizer, selected from the group consisting of: natural or synthetic tocopherols, other natural anti-oxidants, BHT, BHA, free radical scavengers, enzymes with anti-oxidant properties. Effective amounts can range from 100 ppm to 5 wt% (on fat).

Part of our invention are also the foodproducts, comprising a fat phase, in particular spreads and margarine. However our fats can also be used in cream alternative, infant food, chocolate, confectionery, bakery products, sauces, ice-creams, ice-cream coatings, cheese, soups, mayonnaise, dressings, enteral or parental products, wherein the fat phase contains a fat according to claims 1 - 15.

Our fats can be obtained by preparing the pure triglycerides and blending these in the required ratios.

However a very useful method for the preparation of our blends is an interesterification of a (non-hardened) fish oil with a saturated fatty acid. This interesterification can be performed by using an enzyme. In that case enzymes can be applied, that display a specificity for e.g. long chain polyunsaturated fatty acids over saturated fatty acids, or that display a preference for one long chain polyunsaturated fatty acid over another long chain polyunsaturated fatty acid.

In our example we have set out another possible interesterification method for the preparation of our novel fats. According to this method a fish oil is first subjected to glycerolysis in the presence of a lipase. The crude reaction product obtained is enriched in long chain polyunsaturated fatty acids. This crude product is reconverted to triglycerides by performing an interesterification, using a fat high in e.g. $C_{16}$ or $C_{18}$ saturated fatty acids, such as hardened low erucic rape seed oil. Other routes for the preparation of our fats are illustrated by the other examples.

LIST OF USED CODES AND THEIR EXPLANATION

| | |
|---|---|
| wf(TUNA)f = TUNAf = | The olein fraction of semi refined tuna oil obtained low temperature solvent fractionation, having at least 35 % of DHA. |
| BO68 = | Hardened soyabean oil melting point 68°C. |
| POs = | Dry fractionated palm oil stearine fraction. |
| CCB = | Cocoa butter. |
| POf37 = | Partially hardened palm oil olein fraction melting point of 37°C. |
| CN = | Coconut oil. |
| CNs = | Coconut oil stearin fraction. |
| nPOm = | Wet fractionated palm oil mid fraction. |
| df(PO)f = | Dry fractionated palm oil olein fraction. |
| HS1 = Hardstock = | The stearin fraction of a chemical interesterrified blend of fully hardened palm oil and a fully hardened palm kernel olein fraction. |
| SF = | Sunflower oil. |
| PO = | Palm oil. |
| in = | Interesterified. |

EXAMPLE I

A fish oil enriched in 20:5 and 22:6 is prepared by reacting menhaden oil (composition given in table 1.) with glycerol in the presence of *Pseudomonas cepacia* lipase at a temperature of 37°C. The ratio of oil to glycerol is 3 (wt/wt) and the quantity of lipase is 1% by weight on oil. 5% water by weight is present in the glycerol. After 48 hours the reaction is terminated by heating to 100°C and the glycerol is separated from the reaction mixture. The triglycerides are separated from the glyceride fraction by adsorption of the partial glycerides and the free fatty acids (FFA) onto silica, to give the enriched oil of composition shown in table 1. This oil is interesterified with hardened low erucic acid rapeseed oil (composition in table 1.) using *Rhizomucor miehei,* to give the final product oil with a composition given in table 1. All the above processes are carried out under nitrogen to prevent deterioration of the oil.

Table 1. Fatty acid composition (wt%).

| | C14:0 | C16:0 | C16:1 | C16:u | C18:0 | C18:1 | C18:2 | C18:3 | C18:4 | C20:0 | C20:1 | C20:5 | C20:u | C22:0 | C22:1 | C22:5 | C22:6 | C22:u | C24:0 |
|---|---|---|---|---|---|---|---|---|---|---|---|---|---|---|---|---|---|---|---|
| Original oil | 8.3 | 19.6 | 11.9 | 6.5 | 3.4 | 12.4 | 1.3 | 1.5 | 2.5 | 0.8 | 0.3 | 14.5 | 3.6 | 0.0 | 0.3 | 2.5 | 6.5 | 1.3 | 0.0 |
| Enriched oil | 0.3 | 4.3 | 6.7 | 3.8 | 1.5 | 16.9 | 1.8 | 1.7 | 3.5 | 1.0 | 2.8 | 28.1 | 6.8 | 0.0 | 0.0 | 5.6 | 13.6 | 1.9 | 0.0 |
| Hardened low erucic acid rapeseed oil (LEAR oil) | 0.0 | 4.0 | 0.0 | 0.0 | 94.0 | 0.0 | 0.0 | 0.0 | 0.0 | 2.0 | 0.0 | 0.0 | 0.0 | 0.0 | 0.0 | 0.0 | 0.0 | 0.0 | 0.0 |
| 75% enriched fish oil + 25% hardened LEAR oil | 0.2 | 4.2 | 5.0 | 2.8 | 24.6 | 12.7 | 1.3 | 1.3 | 2.6 | 1.3 | 2.1 | 21.1 | 5.1 | 0.0 | 0.0 | 4.2 | 10.2 | 1.4 | 0.0 |

EXAMPLE II

A low temperature solvent fractionation at -70°C was done on semi refined tuna oil with the composition , mentioned in table II, under the conditions as mentioned in "Progress in the chemistry of fats and other lipids" vol. 3 Holman R.T. et al 1955, using 4 L of acetone per Kg tuna oil to enrich the oil in DHA and EPA. After removal of the acetone the olein fraction of the tuna oil (= wf(tuna)f) with the composition, mentioned in table 2, was obtained. This fraction was stored in the freezer under nitrogen.

All the ingredients for the enzymic interesterification were stored at ambient for at least one hour. All oils were used as liquid oils. To the tuna oil olein fraction 400 ppm of anti-oxidant (BHT) was added.

The tuna oil olein fraction was divided in different portions. Then the liquid complementary fat was added to each of the tuna oil olein fractions and mixed in. A sample was taken for carbon number and FAME analyses. For the enzymic interesterification a 1,3 specific lipase (*Rhizomucor Miehei)* was used. The lipase was added to the mixed oils in a weight ratio of 40:1 oil:lipase. A nitrogen blanket was put over the mixture to prevent deterioration of the oil. The reaction mixture was put in a magnetic stirred heatblock and the temperature was adjusted to 60°C. After 96 hours the reaction was stopped.

The samples were cleaned through an alumina column to remove FFA, mono- and diglycerides. Carbon number and FAME analyses were done via GC on the samples before and after lipase treatment.

Two methods were used to prove that at least 5% of the total amount of C14+ was bonded on a triglyceride molecule with L1 and/or L2. The first method involves a calculation and gives the maximum amount which is bonded on a triglyceride molecule with L1 and / or L2. The second method which involves an analytical method gives some information about the minimum amount which is bonded on the same triglyceride molecule with L1 and / or L2.

A statistical programm was used to calculate a carbon number based on the randomized distribution of the fatty acids in a triglyceride molecule. This programm was checked by using the FAME results of a (random) chemical interesterification for a standard interesterified fat mix from palm oil stearin/palm kernel stearin and comparing the calculated carbon number profile with the measured carbon number profile (see table 3). The differences were very small so that it was concluded that the programm gives the correct results. Then the enzymic interesterification according to the invention was tested. The FAME and carbon number of the enzymic interesterified product were measured. The measured carbon number was equated to the calculated carbon number and the differences were very small. Because of this we concluded that the enzymic interesterification resulted in a random distribution of the fatty acids in the triglyceride molecule. In a randomized interesterified product it is possible to calculate the amount of C14+ bonded on a triglyceride molecule with L1 and/or L2.

The second method is an analytical method. Two parts of the sample (Band a and Band b) with a certain amount of unsaturation were collected by using Silver-ion HPLC. Band A had about 6 till 9 unsaturations and Band B had 9 till 18 unsaturations. On the triglycerides of the two bands FAME and carbon number analyses were done.

From these FAME analyses a carbon number was calculated by using the statistical programm. This carbon number was equated to the measured carbon number. From these analyses and calculations it was possible to calculate the minimum amount of C14+ which was bonded on a triglyceride molecule with L1 and/or L2. The actual amount will be even higher because there was more sample than just the two analyzed bands.

Interesterification experiments were done on the following blends:

70/20/5     wf(tuna)f / B068 / POs
70/20/5     wf(tuna)f / POs / BO68     (= comparative example)

The composition of BO68 and POs are given in table 2.

The experiments were done according to the method described above. The experiments were stopped after 96 hours. The carbon number and FAME of the blends and the interesterified blends were determined. The results of the FAME analyses are listed in table 4 and the results of the carbon number analyses are listed in table 5.

The results of the calculated amount of C14+ which is bonded on a triglyceride molecule with L1 and/or L2 are listed in table 6. The results of the analyzed amount of C14+ which is bonded on a triglyceride molecule with L1 and/or L2 are listed in table 7.


EXAMPLE III

Interesterification experiments were done on the following blends:

75/25     wf(tuna)f / BO68
75/25     wf(tuna)f / POs     (comparative example)

The BO68 and POs are the same as in example II (see table 2).

The experiments were done according to the method described in example II. This tuna olein fraction was alumina treated to remove FFA, mono- and diglycerides, before lipase treatment. After 96 hours the experiments were stopped. The analyses of the reaction mixtures were done. The results of all these analyses are listed in tables 8 and 9.

The results of the calculated amount of C14+ which is bonded on a triglyceride molecule with L1 and/or L2 are listed in table 10. The results of the analyzed amount of C14+ which is bonded on a triglyceride molecule with L1 and/or L2 are listed in table 11.

Unstabilised N-values were measured on the reaction products as well. These were:

|  | in(wf(TUNA)f/BO68) | in(wf(TUNA)f/POs) |
| --- | --- | --- |
| N-10 n.s. | 14.4 % | 8.8 % |
| N-20 n.s. | 9.0 % | 6.9 % |
| N-30 n.s. | 4.6 % | 3.9 % |

EXAMPLE IV

A fish oil concentrate was made according to the following procedure.

1. Chemical Hydrolysis of Tuna oil

Method adapted from Ratnayake et al (Fat Sci . Tech. 90 (10), 1988, page 381)

Tuna oil (200g) was refluxed for 1 hour in an atmosphere of nitrogen with a mixture of 47 g of potassium hydroxide pellets, 260 mls ethanol (96%), and 88 mls deionised water. The saponified mixture was diluted with 500 mls of water and the non-saponifiable matter was extracted with hexane (3 x 100ml). The aqueous layer was neutralised with 500mls of 1 M HCl. The free fatty acids were extracted into hexane (3x 100ml). The hexane was removed by evaporation.

2. Urea Fractionation of Tuna Acids

Method adapted from Robles Medina et al JAOCS vol 72 no 5 (1995)

The fatty acids (100g) were added with stirring to a hot (60°C) solution of 400g of Urea and 800 mls of ethanol. The mixture was stirred for 1 hour before the temperature was reduced by 1°C/ hour to 4°C at which temperature the mixture was held for 16 hours. The mixture was fractionated to remove the stearin fraction. The ethanol was removed from the olein fraction by evaporation. The olein was mixed with 250 mls of hexane and 250 mls of 1 M HCl. The hexane layer was isolated and the aqueous layer washed with a further 100 ml hexane. The hexane was removed by evaporation.

3. Recombination to triglyceride batch 1

47 g of Tuna acids were mixed with approximately 4 g of glycerol and 4 g of *Rhizomucor miehei* in a jacketed vessel at 55°C with a magnetic stirrer. Nitrogen was allowed to blow over the surface to remove any water produced during the reaction. The reaction was allowed to continue for 10 days until the FFA had been substantially reduced. The product after removal of the enzyme by filtration was stirred at 60°C with 50 g of basic alumina in 100 mls of hexane. The alumina was removed by filtration.

batch 2

The free fatty acids were divided into 4 samples which were recombined to triglyceride on 12 to 15 g scale in glass vials at 55°C in a magnetic hot block. Typically 14 g of free fatty acid were mixed with 1.3 g glycerol and 0.7 g *Rhizomucor miehei*. Nitrogen was allowed to flow over the surface to remove water. The reactions were allowed to continue for 1 week. 50 g of product, after removal of the enzyme by filtration, was stirred at 60°C with 270 g of basic alumina in 100 mls of hexane. The alumina was removed by filtration.

The oil from "Recombination to triglycerides" batch 1 was called D58. The FAME composition of D58 is given in table 12.

Interesterification experiment was done on the following blend:

75/25    fish oil concentrate (= D58) / BO68

The interesterification experiment was done according to the method of example II.

The interesterification experiment was stopped after 115 hours. The FAME and carbon number analysis were done, the results are listed in table 12 and 13.

The results of the calculated amount C14+ which is bonded on a triglyceride molecule with L1 and/or L2 of this sample is listed in table 14.

EXAMPLE V

The interesterification experiments were done according to the method of example II. This time the interesterification reactions were stopped after 46 hours.

The following interesterified blend was used :

75 / 25    wf(TUNA)f (= D40) / BO68

The FAME and carbon numbers of this interesterified mixture are listed in table 15 and 16.

D40 being a tuna oil olein fraction, obtained by low temperature solvent fractionation, having about 38 wt % of DHA.

EXAMPLE VI

Blends were made of the interesterified mixture mentioned in example V (= in(FISH)) and a complementary fat / fat blend for the following applications:

| Application | Reference | Blend inside the patent |
|---|---|---|
| **Chocolate** | Cocoa butter | Cocoa butter/in(FISH) 99/1 |
| **Bakery** | POf37/df(PO)f 40/60 | POf37/df(PO)f/in(FISH) 40/50/10 |
| **Ice cream coatings** | Coconut oil | CN/CNs/in(FISH) 90/5/5 |
| **Ice cream** | PO | PO/in(FISH) 90/10 |
| **Non dairy creams** | nPOm/df(PO)f 40/60 | nPOm/df(PO)f/in (FISH) 40/40/20 |
| **Health margarines / Health spreads** | HS1/SF 13/87 | HS1/SF/in(FISH) 13/77/10 |
| **Confectionery fillings** | nPOm/df(PO)f 60/40 | nPOm/df(PO)f/in (FISH) 60/20/20 |
| **Mayonnaise / Sauces** | SF | SF/in(FISH) 90/10 |
| **Dressings** | SF | SF/in(FISH) 90/10 |

The range of N-values of the references and measured N-values for the blends are listed in table 17.

EXAMPLE VII

The interesterification experiments were done according to the method of example II. This time the interesterification reactions were stopped after 48 hours.

The two following interesterified blends were used :

75 / 25    wf(TUNA)f / BO68

75 / 25    wf(TUNA)f / POs

The FAME and carbon numbers of these interesterified mixture are listed in table 18 and 19.

EXAMPLE VIII

Spreads were made according to the following recipe:

| Fat Phase | |
|---|---|
| Fat Blend | 40 % |
| Hymono 7804 | 0.3 % |
| Colour (2% β-carotene) | 0.02 % |
| Total Water | 40.32 % |

| Aqueous Phase (to pH 5.1) | |
|---|---|
| Water | 56.44 % |
| Skimmed Milk Powder | 1.5 % |
| Gelatin (270 bloom) | 1.5 % |
| Potassium Sorbate | 0.15 % |
| Citric Acid Powder | 0.07 % |
| Total | 59.66 % |

In above recipe two different fat blends were applied. The fat blend according to the invention was as follows:
- example VII in(wf(TUNA)f/BO68) according to

The fat blend used as comparative example was as follows: in (wf (TUNA) f/POs)

The FAME results of the in(wf(TUNA)f/BO68) and the in(wf(TUNA)f/POs) are listed in table 18.

The spreads were processed according to the following procedure: 2 kg of material was prepared and processed.

A micro-votator processing line was set up as follows:

| Premix conditions | - Stirrer Speed 60 rpm |
|---|---|
| | - Temperature 50°C |
| pump | - Proportioning pump set at 60% (30 g/min.). |
| $A_1$ conditions | - Shaft speed 1000 rpm |
| | - Temperature set at 2°C |
| $C_1$ conditions | - Shaft speed 1000 rpm |
| | - Temperature set to 8°C |
| $A_2$ conditions | - Shaft Speed 1000 rpm |
| | - Temperature set to 0°C |
| $C_2$ conditions | - Shaft speed 1000 rpm |
| | - Temperature set to 8°C |

The aqueous phase was prepared by heating the required amount of water to approximately 80°C and then, using a Silverson mixer, slowly mixing in the ingredients. The pH of the system was adjusted to 5.1 by adding 20% Lactic acid solution as required.

A premix was prepared by stirring the fat phase in the premix tank and then slowly adding in the aqueous phase. When addition was complete, the mix was stirred for a further 5 minutes before pumping through the line. When the process had stabilised (around 20 minutes), product was collected for storage and evaluation.

The process conditions for the spread of in(wf(TUNA)f/BO68) were as follows:

| Sample | $A_{1\ Exit}$ (°C) | $C_{1\ Exit}$ (°C) | $A_{2\ Exit}$ (°C) | $C_{2\ Exit}$ (°C) | Line Pressure (bar) |
|---|---|---|---|---|---|
| in(wf(TUNA)f / BO68) | 9.9 | 16.7 | 8.2 | 13.1 | 1.3 to 1.6 |

Under these conditions a good oil continues low fat spread was produced.

A comparative spread using in(wf(TUNA)f/POs) was attempted under the same conditions as those above. This could not be achieved using these conditions.

In order to achieve a good oil continues low fat spread, the votator had to be altered to the following conditions:

| pump | - Proportioning pump set at 40% (20 g/min.). |
|---|---|

(continued)

| A$_1$ conditions | - Shaft speed 1000 rpm<br>- Temperature set at -7°C |
|---|---|
| C$_1$ conditions | - Shaft speed 1000 rpm<br>- Temperature set to 4°C |
| A$_2$ conditions | - Shaft Speed 1000 rpm<br>- Temperature set to -7°C |
| C$_2$ conditions | - Shaft speed 1000 rpm<br>- Temperature set to 4°C |

Using these unit temperatures produced the following exit temperatures:

| Sample | A$_{1\,Exit}$ (°C) | C$_{1\,Exit}$ (°C) | A$_{2\,Exit}$ (°C) | C$_{2\,Exit}$ (°C) | Line Pressure (bar) |
|---|---|---|---|---|---|
| in(wf(TUNA)f /POs) | 4.3 | 12.5 | 3.0 | 10.2 | 1.4 to 2.7 |

Evaluations were done on C-value and on conductivity. The C-value in g/cm$^2$ of the spreads was measured by using a cone penetrometer. The conductivity in μ siemens/cm was measured by using a Wayne Kerr.

| | 5°C |
|---|---|
| **Sample** | C-value |
| **in(wf(TUNA)f/ BO68)** | 440 |
| **in(wf(TUNA)f/POs)** | < 90 |

The spread made with in(wf(TUNA)f/POs) was too soft to enable us to measure a C-value.

EXAMPLE IX

Range style dressings were made according to the following recipe:

| | wt% |
|---|---|
| Liquid oil | 25.0 |
| Maltodextrin | 20.0 |
| Dried egg yolk | 0.8 |
| Xanthum gum | 0.4 |
| Vinegar | 5.0 |
| Water | 44.8 |

In above recipe two different liquid oils were applied. The liquid oil for the reference was Sunflower oil and the liquid oil according to the invention was as follows: - Sunflower oil / in(D40/BO68) 90/10
The FAME results of the in(D40/BO68) are listed in table 15. Results of the NMR measurements of the blend according to the invention are listed in table 17.
A large batch of aqueous phase was manufactured and used for all the dressings. The water and maltodextrin were first blended using a Silverson mixer. The egg yolk, xanthum gum and vinegar were sequentially added whilst continuing to stir with the Silverson until complete mixing had occurred. At this stage the pH = 3.25, therefore no further adjustment to the pH was made.

The oils were slowly added to the aqueous phase whilst mixing using the Silverson. Mixing was continued until all the oil had been dispersed. The dressings were transferred to 200 ml plastic sterile bottles.

The viscosities of the samples were determined using a Brookfield Viscometer fitted with a number 4 spindle rotating at 10 rpm. The samples were contained in identical 200 ml plastic bottles hence the viscosities are directly comparable with each other. For each sample the average of three measurements was taken with the sample being allowed to relax for 1 minute between each 1 minute of shear. The viscosity results of the dressings are listed in table 20.

The oil droplet size distribution was determined using a Malvern Mastersizer using a 45 mm filter. The results of these measurements, as Sauter-mean particle diameter are listed in table 20.

EXAMPLE X

Spreads were made according to the following recipe:

| Fat Phase | |
| --- | --- |
| Fat Blend | 40 % |
| Hymono 7804 | 0.3 % |
| Colour (2% β-carotene) | 0.02 % |
| Total Water | 40.32 % |

| Aqueous Phase (to pH 5.1) | |
| --- | --- |
| Water | 56.44 % |
| Skimmed Milk Powder | 1.5 % |
| Gelatin (270 bloom) | 1.5 % |
| Potassium Sorbate | 0.15 % |
| Citric Acid Powder | 0.07 % |
| Total | 59.66 % |

In above recipe two different fat blends were applied. The fat blend for the reference was HS1 / Sunflower oil 13/87 and the fat blend according to the invention was as follows: - HS1 / Sunflower oil / in(D40/BO68) 13/77/10

The FAME results of the in(D40/BO68) are listed in table 15. Results of the NMR measurements of the blend according to the invention are listed in table 17.

The spreads were processed according to the following procedure:
2 kg of material was prepared and processed.

A micro-votator processing line was set up as follows:

| Premix conditions | - Stirrer Speed 60 rpm |
| --- | --- |
| | - Temperature 50°C |
| pump | - Proportioning pump set at 60% (30 g/min.). |
| $A_1$ conditions | - Shaft speed 1000 rpm |
| | - Temperature set at 8°C |
| $C_1$ conditions | - Shaft speed 1000 rpm |
| | - Temperature set to 10°C |
| $A_2$ conditions | - Shaft Speed 1000 rpm |
| | - Temperature set to 10°C |
| $C_2$ conditions | - Shaft speed 1000 rpm |
| | - Temperature set to 13°C |

The aqueous phase was prepared by heating the required amount of water to approximately 80°C and then, using a silverson mixer, slowly mixing in the ingredients. The pH of the system was adjusted to 5.1 by adding 20% Lactic acid solution as required.

A premix was prepared by stirring the fat phase in the premix tank and then slowly adding in the aqueous phase. When addition was complete, the mix was stirred for a further 5 minutes before pumping through the line. When the process had stabilised (around 20 minutes), product was collected for storage and evaluation.

The typical process conditions were as follows:

| Sample | $A_{1\,Exit}$ (°C) | $C_{1\,Exit}$ (°C) | $A_{2\,Exit}$ (°C) | $C_{2\,Exit}$ (°C) | Line Pressure (bar) |
|---|---|---|---|---|---|
| Reference | 13.2 | 18.7 | 13.6 | 15.6 | 0.5 to 2 |
| HS1/SF/in(D40/BO68) 13/77/10 | 12.2 | 18.6 | 13.4 | 15.0 | 1 to 3 |

For both systems, very good oil continuous low fat spreads were produced using this system.

Evaluations were done on C-value and on conductivity. The C-value in $g/cm^2$ of the spreads was measured by using a cone penetrometer. The conductivity in μ siemens/cm was measured by using a Wayne Kerr.

| | 20°C | |
|---|---|---|
| Sample | C-value | Conductivity |
| Reference | 190 | $10^{-5}$ |
| HS1/SF/in(D40/BO68) | 130 | $10^{-5}$ |

All samples spread very easily on grease-proof paper, with no obvious signs of water loss.

EXAMPLE XI

Ice cream was made according to the following recipe:

| | wt% |
|---|---|
| Fat blend | 10.0 |
| Skimmed milk powder | 10.0 |
| Icing sugar | 12.0 |
| Corn syrup solids | 4.0 |
| Dextrose monohydrate | 2.0 |
| Sherex IC 9330® | 0.6 |
| Water | 61.4 |
| Total | 100.0 |

Sherex IC 9330® is a product from Quest International and comprises mono- and diglycerides admixed with different stabilizers.

In above recipe two different fat blends were applied. The fat blend for the reference was PO / Sunflower oil 90/10 and the fat blend according to the invention was as follows:

- PO / in(D40/BO68) 90/10

The FAME results of the in(D40/BO68) are listed in table 15. Results of the NMR measurements of the blend according to the invention are listed in table 17.

All ingredients except the water and the fat were mixed. Then the cold water was added to this mixture. This mixture was heated in a water bath till a temperature of 70°C. Then the fully liquid palm oil was added to the mixture while "stirred" in the ultra-turrax. This emulsion was cooled in a water bath at 20°C untill a temperature of 30°C was reached. The emulsion was stirred in the ultra-turrax again.

The batch ice cream machine was held for 24 hours at -28°C prior to use. The emulsion was placed in the batch ice cream machine and stirred for 15 minutes. The resulting ice cream was stored at -20°C for 24 hours and then evaluated.

The viscosity of the ice cream emulsion, prior to freezing was measured. The overrun and hardness were determined. The viscosity was measured by using the Haake viscometer. Hardness was measured by using a Stevens texture analyser with a 45° cone at a speed of 0.5 mm/second till a deepness of 2 mm.

| Sample | Overrun (%) | Hardness (gram) |
|---|---|---|
| Reference | 31.5 | 142 |
| PO/in(D40/BO68) | 42.7 | 141.4 |

The viscosities of the emulsions were similar.

Table 2

| FAME | Semi refined tuna oil | wf (TUNA)f | BO68 | POs |
|---|---|---|---|---|
| C12:0 | 0.1 | 0.0 | 0.1 | 0.0 |
| C12:other | 0.0 | 0.0 | 0.0 | 0.0 |
| C14:0 | 3.5 | 1.7 | 0.2 | 0.8 |
| C14:other | 1.6 | 0.3 | 0.0 | 0.0 |
| C16:0 | 20.8 | 3.1 | 13.8 | 91.8 |
| C16:1 | 5.4 | 7.6 | 0.0 | 0.1 |
| C16:others | 4.7 | 3.2 | 0.2 | 0.1 |
| C18:0 | 6.1 | 0.6 | 83.7 | 3.8 |
| C18:1 | 14.8 | 16.1 | 0.8 | 2.6 |
| C18:2 | 1.2 | 3.1 | 0.1 | 0.6 |
| C18:3 | 0.7 | 0.9 | 0.0 | 0.0 |
| C18:others | 1.9 | 1.7 | 0.0 | 0.0 |
| C20:0 | 0.4 | 0.0 | 0.6 | 0.2 |
| C20:1 | 1.1 | 1.1 | 0.0 | 0.0 |
| C20:2 | 0.0 | 0.2 | 0.0 | 0.0 |
| C20:3 | 0.0 | 0.0 | 0.0 | 0.0 |
| C20:4 | 0.0 | 0.0 | 0.0 | 0.0 |
| C20:5 | 5.1 | 12.0 | 0.0 | 0.0 |
| C20:others | 3.1 | 4.0 | 0.0 | 0.0 |
| C22:0 | 0.0 | 0.0 | 0.3 | 0.0 |
| C22:1 | 0.3 | 0.0 | 0.0 | 0.0 |
| C22:5 | 1.5 | 2.1 | 0.0 | 0.0 |
| C22:6 | 24.8 | 39.6 | 0.0 | 0.0 |
| C22:others | 2.9 | 2.8 | 0.0 | 0.0 |
| C24:0 | 0.0 | 0.0 | 0.1 | 0.0 |
| others | 0.0 | 0.0 | 0.0 | 0.0 |
| Total | 100.0 | 100.0 | 99.9 | 100.0 |

Table 3

| Programm check on a chemical interesterification | | | |
|---|---|---|---|
| FAME | wfPOs/PKs (blend) | in(wfPOs/PKs) | Calculated by statistical program |
| C8:0 (%) | 0.6 | 0.6 | |
| C10:0 (%) | 1.1 | 1.1 | |
| C12:0 (%) | 22.5 | 22.5 | |
| C14:0 (%) | 10.0 | 9.9 | |
| C16:0 (%) | 50.2 | 50.5 | |
| C17:0 (%) | 0.1 | 0.1 | |
| C18:0 (%) | 4.3 | 4.3 | |
| C18:1 (%) | 9.9 | 10.0 | |
| C18:2 (%) | 0.6 | 0.7 | |
| C20:0 (%) | 0.3 | 0.3 | |
| C22:0 (%) | 0.1 | 0.0 | |
| Carbon number | | | |
| C28 | 0.1 | 0.0 | 0.0 |
| C30 | 0.2 | 0.0 | 0.0 |
| C32 | 1.4 | 0.4 | 0.2 |
| C34 | 2.7 | 0.7 | 0.4 |
| C36 | 11.5 | 3.3 | 2.5 |
| C38 | 10.4 | 4.2 | 3.4 |
| C40 | 6.4 | 12.7 | 11.4 |
| C42 | 4.1 | 12.3 | 11.7 |
| C44 | 2.4 | 21.9 | 22.1 |
| C46 | 3.7 | 17.0 | 17.8 |
| C48 | 30.5 | 15.5 | 17.0 |
| C50 | 21.7 | 9.0 | 10.2 |
| C52 | 3.8 | 2.5 | 2.9 |
| C54 | 1.1 | 0.4 | 0.3 |
| C56 | 0.1 | 0.1 | 0.0 |
| C58 | 0.1 | 0.0 | 0.0 |

Table 4

| FAME data for example II | | | | |
|---|---|---|---|---|
| FAME | TUNAf / BO68 (blend) | in (TUNAf / BO68) | TUNAf / POs (blend) | in (TUNAf /POs) |
| C12:0 | 0.1 | 0.1 | 0.0 | 0.0 |
| C12:other | 0.0 | 0.0 | 0.0 | 0.0 |
| C14:0 | 1.5 | 1.6 | 1.7 | 1.8 |

Table 4   (continued)

| FAME data for example II | | | | |
|---|---|---|---|---|
| FAME | TUNAf / BO68 (blend) | in (TUNAf / BO68) | TUNAf / POs (blend) | in (TUNAf /POs) |
| C14:other | 0.5 | 0.6 | 0.6 | 0.4 |
| C16:0 | 14.8 | 14.9 | 34.9 | 36.3 |
| C16:1 | 4.4 | 4.7 | 4.3 | 4.9 |
| C16:other | 2.4 | 2.6 | 2.3 | 2.5 |
| C18:0 | 26.6 | 27.1 | 7.3 | 7.7 |
| C18:1 | 10.4 | 11.3 | 10.5 | 11.9 |
| C18:2 | 1.2 | 1.1 | 1.9 | 2.1 |
| C18:3 | 0.6 | 0.6 | 0.6 | 0.5 |
| C18:other | 1.6 | 1.5 | 0.8 | 0.8 |
| C20:0 | 0.2 | 0.2 | 0.1 | 0.1 |
| C20:1 | 0.7 | 0.8 | 0.8 | 0.9 |
| C20:2 | 0.3 | 0.2 | 0.2 | 0.2 |
| C20:3 | 0.2 | 0.2 | 0.2 | 0.1 |
| C20:4 | 1.6 | 1.5 | 1.5 | 1.5 |
| C20:5 | 6.3 | 5.8 | 6.2 | 5.5 |
| C20:other | 0.6 | 0.6 | 0.6 | 0.6 |
| C22:0 | 0.1 | 0.1 | 0.1 | 0.0 |
| C22:1 | 0.3 | 0.3 | 0.3 | 0.1 |
| C22:5 | 1.2 | 1.1 | 1.2 | 1.1 |
| C22:6 | 23.0 | 21.5 | 21.9 | 19.3 |
| C22:other | 1.7 | 1.7 | 1.9 | 1.7 |
| C24:0 | 0.0 | 0.0 | 0.0 | 0.0 |
| Total | 100.3 | 99.8 | 99.9 | 100.0 |

Table 5

| Carbon number data for example II | | | | |
|---|---|---|---|---|
| Carbon number | TUNAf/BO68/POs 70/20/5 (blend) | in (TUNAf/ BO68/POs) 70/20/5 | TUNAf/POs/BO68 70/20/5 (blend) | in (TUNAf/POs/ BO68) 70/20/5 |
| C36 | 0.2 | 0.2 | 0.0 | 0.0 |
| C38 | 0.3 | 0.3 | 0.0 | 0.0 |
| C40 | 0.4 | 0.3 | 0.0 | 0.0 |
| C42 | 0.6 | 0.6 | 0.0 | 0.0 |
| C44 | 0.7 | 0.8 | 0.0 | 0.0 |
| C46 | 1.2 | 1.3 | 0.8 | 1.5 |
| C48 | 7.9 | 4.3 | 26.6 | 12.3 |
| C50 | 6.2 | 10.9 | 5.7 | 15.0 |
| C52 | 14.3 | 18.0 | 5.9 | 14.8 |

Table 5   (continued)

| Carbon number data for example II | | | | |
|---|---|---|---|---|
| Carbon number | TUNAf/BO68/POs 70/20/5 (blend) | in (TUNAf/ BO68/POs) 70/20/5 | TUNAf/POs/BO68 70/20/5 (blend) | in (TUNAf/POs/ BO68) 70/20/5 |
| C54 | 27.9 | 19.6 | 11.8 | 16.3 |
| C56 | 11.9 | 17.0 | 10.3 | 12.6 |
| C58 | 11.3 | 12.7 | 12.0 | 9.4 |
| C60 | 10.0 | 8.1 | 12.9 | 10.2 |
| C62 | 6.1 | 5.2 | 14.0 | 7.9 |
| C64 | 1.0 | 0.7 | 0.0 | 0.0 |
| C66 | 0.0 | 0.0 | 0.0 | 0.0 |
| C68 | 0.0 | 0.0 | 0.0 | 0.0 |
| Total | 100.0 | 100.0 | 100.0 | 100.0 |

Table 6

| Calculated data for example II of the amount of c14+ which are bonded on a triglyceride molecule with L1 and/or L2. | | | | | | |
|---|---|---|---|---|---|---|
| 70/20/5        wf(tuna)f / BO68 / POs | | | | | | |
| Carbon number | Analyzed (wt%) | Calculated (wtt) | M/P/S + X (wt%) + L1/L2 | M/P/S + M/P/S (wt%) + L1/L2 | M/P/S wt% | wt% of the total added amount c14+ bonded on a molecule with L1 and/or L2 |
| C36 | 0.2 | 0.0 | 0.0 | 0.0 | 0.0 | 0.0 |
| C38 | 0.3 | 0.0 | 0.0 | 0.0 | 0.0 | 0.0 |
| C40 | 0.3 | 0.0 | 0.0 | 0.0 | 0.0 | 0.0 |
| C42 | 0.6 | 0.0 | 0.0 | 0.0 | 0.0 | 0.0 |
| C44 | 0.8 | 0.1 | 0.0 | 0.0 | 0.0 | 0.0 |
| C46 | 1.3 | 0.6 | 0.0 | 0.0 | 0.0 | 0.0 |
| C48 | 4.3 | 3.0 | 0.0 | 0.0 | 0.0 | 0.0 |
| C50 | 10.9 | 8.9 | 0.0 | 0.0 | 0.0 | 0.0 |
| C52 | 18.0 | 15.6 | 0.6 | 1.0 | 0.8 | 1.8 |
| C54 | 19.6 | 18.1 | 3.6 | 3.6 | 3.3 | 7.5 |
| C56 | 17.0 | 19.2 | 6.2 | 6.3 | 5.8 | 13.2 |
| C58 | 12.7 | 16.2 | 6.6 | 4.4 | 4.8 | 11.0 |
| C60 | 8.1 | 8.8 | 5.4 | 0.0 | 1.5 | 3.5 |
| C62 | 5.2 | 7.0 | 4.1 | 0.0 | 1.2 | 2.7 |
| C64 | 0.7 | 1.4 | 0.0 | 0.0 | 0.0 | 0.0 |
| C66 | 0.0 | 1.2 | 0.0 | 0.0 | 0.0 | 0.0 |
| Total | 100.0 | 100.1 | | | 0.0 | 39.8 |
| x = all fatty acids except M, P and S (C14:0, C16:0 and C18:0) | | | | | | |
| / = or | | | | | | |

Table 7

| Analyzed results of example II of the amount of C14+ which are bonded on a triglyceride molecule with L1 and/or L2. | | | | | | | |
|---|---|---|---|---|---|---|---|
| | HPLC band | Band as % TAGS (g/100g) | Sum of Cno's containin g target TAG in band (%wt) | Sum of target acids in band (%wt) | Target acids in target TAGs in band (g/100g) | Target acids in total FAME on TG (%wt) | Therefore target acids in target TAGs (%wt on total FAME) |
| in(TUNAf BO68/POs) 70/20/5 | A | 31.7 | 96.0 | 44.0 | 13.4 | 43.6 | 30.7 |
| | B | 32.3 | 46.0 | 19.2 | 2.9 | 43.6 | 6.5 |
| | | | | | | **Total:** | **37.3** |

Table 8

| FAME data for example III | | | | |
|---|---|---|---|---|
| FAME | TUNAf / BO68 (blend) | in (TUNAf / BO68) | TUNAf / POs (blend) | in (TUNAf /POs) |
| C12:0 | 0.1 | 0.1 | 0.1 | 0.1 |
| C12:other | 0.1 | 0.1 | 0.1 | 0.0 |
| C14:0 | 1.3 | 1.3 | 1.5 | 1.6 |
| C14:other | 0.5 | 0.5 | 0.5 | 0.5 |
| C16:0 | 5.0 | 5.2 | 26.8 | 30.0 |
| C16:1 | 5.3 | 5.3 | 5.3 | 5.7 |
| C16:other | 2.6 | 2.6 | 2.5 | 2.7 |
| C18:0 | 21.8 | 23.3 | 1.2 | 1.3 |
| C18:1 | 12.6 | 12.5 | 12.3 | 13.3 |
| C18:2 | 1.4 | 1.4 | 1.5 | 1.5 |
| C18:3 | 0.8 | 0.8 | 0.8 | 0.8 |
| C18:other | 2.1 | 2.0 | 2.1 | 1.8 |
| C20:0 | 0.1 | 0.1 | 0.0 | 0.1 |
| C20:1 | 0.7 | 0.7 | 0.7 | 0.8 |
| C20:2 | 0.2 | 0.2 | 0.2 | 0.2 |
| C20:3 | 0.2 | 0.2 | 0.2 | 0.2 |
| C20:4 | 2.0 | 1.9 | 1.9 | 1.8 |
| C20:5 | 8.6 | 8.2 | 8.5 | 7.6 |
| C20:other | 1.0 | 0.9 | 0.9 | 0.8 |
| C22:0 | 0.1 | 0.1 | 0.0 | 0.0 |
| C22:1 | 0.2 | 0.2 | 0.2 | 0.2 |
| C22:5 | 1.4 | 1.4 | 1.4 | 1.3 |
| C22:6 | 30.0 | 29.1 | 29.5 | 26.0 |
| C22:other | 2.0 | 1.9 | 1.9 | 1.7 |
| C24:0 | 0.0 | 0.0 | 0.0 | 0.0 |

Table 8   (continued)

| FAME data for example III | | | |
|---|---|---|---|
| FAME | TUNAf / BO68 (blend) | in (TUNAf / BO68) | TUNAf / POs (blend) | in (TUNAf /POs) |
| Total | 99.8 | 100.0 | 100.1 | 100.0 |

Table 9

| Carbon number data for example III | | | |
|---|---|---|---|
| Carbon number | TUNAf /BO68 (blend) | in(TUNAf / BO68) | TUNAf / POs (blend) | in(TUNAf / POs) |
| C38 | 0.0 | 0.1 | 0.0 | 0.0 |
| C40 | 0.0 | 0.1 | 0.0 | 0.2 |
| C42 | 0.1 | 0.2 | 0.0 | 0.3 |
| C44 | 0.2 | 0.4 | 0.3 | 0.6 |
| C46 | 0.4 | 0.9 | 1.5 | 2.1 |
| C48 | 1.0 | 2.0 | 24.4 | 12.3 |
| C50 | 3.7 | 5.3 | 5.6 | 13.8 |
| C52 | 12.5 | 12.3 | 5.2 | 12.7 |
| C54 | 26.1 | 18.0 | 8.1 | 14.7 |
| C56 | 13.1 | 18.1 | 12.4 | 13.4 |
| C58 | 15.4 | 16.7 | 14.5 | 10.8 |
| C60 | 13.8 | 12.3 | 13.4 | 11.2 |
| C62 | 9.4 | 10.2 | 10.4 | 5.6 |
| C64 | 3.3 | 2.8 | 3.3 | 2.0 |
| C66 | 1.0 | 0.6 | 0.9 | 0.3 |
| C68 | 0.0 | 0.0 | 0.0 | 0.0 |
| Total | 100.0 | 100.0 | 100.1 | 100.0 |

Table 10

| Calculated data of example III of the amount of C14+ which are bonded on a triglyceride molecule with L1 and/or L2. | | | | | | |
|---|---|---|---|---|---|---|
| 75/25        wf(tuna)f / BO68 | | | | | | |
| Carbon number | Analyzed (wt%) | Calculated (wt%) | M/P/S + X (wt%) + L1/L2 | M/P/S + M/P/S (wt%) + L1/L2 | M/P/S wt% | wt% of the total added amount c14+ bonded on a molecule with L1 and/or L2 |
| C36 | 0.0 | 0.0 | 0.0 | 0.0 | 0.0 | 0.0 |
| C38 | 0.1 | 0.0 | 0.0 | 0.0 | 0.0 | 0.0 |
| C40 | 0.1 | 0.0 | 0.0 | 0.0 | 0.0 | 0.0 |
| C42 | 0.2 | 0.0 | 0.0 | 0.0 | 0.0 | 0.0 |
| C44 | 0.4 | 0.0 | 0.0 | 0.0 | 0.0 | 0.0 |
| C46 | 0.9 | 0.3 | 0.0 | 0.0 | 0.0 | 0.0 |

Table 10   (continued)

| Calculated data of example III of the amount of C14+ which are bonded on a triglyceride molecule with L1 and/or L2. | | | | | | |
|---|---|---|---|---|---|---|
| 75/25       wf(tuna)f / BO68 | | | | | | |
| Carbon number | Analyzed (wt%) | Calculated (wt%) | M/P/S + X (wt%) + L1/L2 | M/P/S + M/P/S (wt%) + L1/L2 | M/P/S wt% | wt% of the total added amount c14+ bonded on a molecule with L1 and/or L2 |
| C48 | 2.0 | 1.2 | 0.0 | 0.0 | 0.0 | 0.0 |
| C50 | 5.3 | 4.0 | 0.0 | 0.0 | 0.0 | 0.0 |
| C52 | 12.3 | 9.3 | 0.3 | 0.4 | 0.3 | 1.1 |
| C54 | 18.0 | 14.7 | 2.5 | 1.3 | 1.6 | 5.2 |
| C56 | 18.1 | 17.9 | 6.6 | 3.7 | 4.3 | 14.6 |
| C58 | 16.7 | 20.8 | 8.9 | 4.6 | 5.6 | 18.7 |
| C60 | 12.3 | 13.1 | 6.0 | 0.0 | 1.8 | 5.9 |
| C62 | 10.2 | 12.7 | 6.4 | 0.0 | 1.9 | 6.2 |
| C64 | 2.8 | 3.3 | 0.0 | 0.0 | 0.0 | 0.0 |
| C66 | 0.6 | 2.8 | 0.0 | 0.0 | 0.0 | 0.0 |
| Total | 100.0 | 100.1 | | | | 51.7 |
| x = all fatty acids except M, P and S (C14:0, C16:0 and C18:0) | | | | | | |
| / = or | | | | | | |

Table 11

| | HPLC band | Band as % TAGs (g/100g) | Sum of Cno's containin g target TAG in band (%wt) | Sum of target acids in band (%wt) | Target acids in target TAGs in band (g/100g) | Target acids in total FAME on TG (%wt) | Therefore target acids in target TAGs (%wt on total FAME) |
|---|---|---|---|---|---|---|---|
| | | | | | | | |
| Analyzed results of example III of the amount of C14+ which are bonded on a triglyceride molecule with L1 and/or L2. | | | | | | | |
| in(TUNAf BO68/POs) | A | 31.9 | 74.4 | 30.2 | 7.2 | 28.7 | 25.0 |
| | B | 38.4 | 49.0 | 10.8 | 2.0 | 28.7 | 7.1 |
| | | | | | | **Total:** | **32.1** |

Table 12

| FAME data for example IV | | |
|---|---|---|
| FAME | D58 | in (D58 / BO68) |
| C14:0 | 0.1 | 0.1 |
| C14:other | 0.5 | 0.3 |
| C16:0 | 0.1 | 3.6 |
| C16:1 | 1.0 | 0.7 |

Table 12   (continued)

| FAME data for example IV | | |
|---|---|---|
| FAME | D58 | in (D58 / BO68) |
| C16:other | 3.4 | 2.4 |
| C18:0 | 0.2 | 26.8 |
| C18:1 | 0.9 | 1.5 |
| C18:2 | 1.8 | 1.4 |
| C18:3 | 0.8 | 0.5 |
| C18:other | 3.5 | 2.3 |
| C20:0 | 0.0 | 0.2 |
| C20:1 | 0.1 | 0.0 |
| C20:2 | 0.0 | 0.0 |
| C20:3 | 0.4 | 0.4 |
| C20:4 | 4.6 | 3.3 |
| C20:5 | 16.1 | 10.8 |
| C20:other | 1.4 | 1.1 |
| C22:0 | 0.0 | 0.1 |
| C22:1 | 0.1 | 0.0 |
| C22:5 | 2.0 | 1.4 |
| C22:6 | 27.3 | 39.3 |
| C22:other | 5.6 | 3.8 |
| C24:0 | 0.0 | 0.0 |
| Total | 99.9 | 100.0 |

Table 13

| Carbon number data for example IV | | |
|---|---|---|
| Carbon number | D58/BO68 (blend) | in (D58 /BO68) |
| C36 | 0.0 | 0.6 |
| C38 | 0.0 | 1.7 |
| C40 | 0.0 | 1.9 |
| C42 | 0.6 | 3.3 |
| C44 | 1.5 | 1.8 |
| C46 | 1.9 | 1.9 |
| C48 | 1.0 | 0.7 |
| C50 | 3.7 | 2.3 |
| C52 | 14.4 | 5.0 |
| C54 | 32.2 | 10.7 |
| C56 | 5.2 | 14.8 |
| C58 | 7.3 | 19.9 |
| C60 | 10.8 | 14.7 |

Table 13   (continued)

| Carbon number data for example IV | | |
|---|---|---|
| Carbon number | D58/BO68 (blend) | in (D58 /BO68) |
| C62 | 10.3 | 12.6 |
| C64 | 7.3 | 5.5 |
| C66 | 3.8 | 2.6 |
| C68 | 0.0 | 0.0 |
| Total | 100.0 | 100.0 |

Table 14

| Calculated data of example IV of the amount of C14+ which are bonded on a triglyceride molecule with L1 and/or L2. | | | | | | |
|---|---|---|---|---|---|---|
| 75/25     fish oil concentrate (= D58) / BO68 | | | | | | |
| Carbon number | Analyzed (wt%) | Calculated (wt%) | M/P/S + X (wt%) + L1/L2 | M/P/S + M/P/S (wt%) + L1/L2 | M/P/S wt% | wt% of the total added amount c14+ bonded on a molecule with L1 and/or L2 |
| C32 C34 | 0.0 | 0.0 | 0.0 | 0.0 | 0.0 | 0.0 |
|  | 0.0 | 0.0 | 0.0 | 0.0 | 0.0 | 0.0 |
| C36 | 0.6 | 0.0 | 0.0 | 0.0 | 0.0 | 0.0 |
| C38 | 1.7 | 0.0 | 0.0 | 0.0 | 0.0 | 0.0 |
| C40 | 1.9 | 0.0 | 0.0 | 0.0 | 0.0 | 0.0 |
| C42 | 3.3 | 0.0 | 0.0 | 0.0 | 0.0 | 0.0 |
| C44 | 1.8 | 0.0 | 0.0 | 0.0 | 0.0 | 0.0 |
| C46 | 1.9 | 0.0 | 0.0 | 0.0 | 0.0 | 0.0 |
| C48 | 0.7 | 0.1 | 0.0 | 0.0 | 0.0 | 0.0 |
| C50 | 2.3 | 0.8 | 0.0 | 0.0 | 0.0 | 0.0 |
| C52 | 5.0 | 3.1 | 0.0 | 0.0 | 0.0 | 0.0 |
| C54 | 10.7 | 7.5 | 1.2 | 0.8 | 0.9 | 3.0 |
| C56 | 14.8 | 12.7 | 3.7 | 4.9 | 4.2 | 14.2 |
| C58 | 19.9 | 20.4 | 6.0 | 8.7 | 7.2 | 24.2 |
| C60 | 14.7 | 18.0 | 12.2 | 0.0 | 3.6 | 12.1 |
| C62 | 12.6 | 21.4 | 14.7 | 0.0 | 4.3 | 14.3 |
| C64 | 5.5 | 8.5 | 0.0 | 0.0 | 0.0 | 0.0 |
| C66 | 2.6 | 7.6 | 0.0 | 0.0 | 0.0 | 0.0 |
| Total | 100.0 | 100.1 |  |  |  | 67.8 |
| x = all fatty acids except M, P and S (C14:0, C16:0 and C18:0) | | | | | | |
| / = or | | | | | | |

Table 15

| FAME data for example V | | |
|---|---|---|
| FAME | D40 | in (D40 / BO68) |
| C12:0 | 0 | 0 |
| C12:other | 0 | 0 |
| C14:0 | 4 | 2 |
| C14:other | 1 | 0 |
| C16:0 | 7 | 8 |
| C16:1 | 4 | 3 |
| C16:other | 0 | 2 |
| C18:0 | 2 | 31 |
| C18:1 | 16 | 11 |
| C18:2 | 1 | 1 |
| C18:3 | 1 | 0 |
| C18:other | 2 | 2 |
| C20:0 | 0 | 0 |
| C20:1 | 2 | 1 |
| C20:2 | 0 | 0 |
| C20:3 | 0 | 0 |
| C20:4 | 0 | 1 |
| C20:5 | 7 | 5 |
| C20:other | 2 | 0 |
| C22:0 | 0 | 0 |
| C22:1 | 3 | 2 |
| C22:5 | 4 | 3 |
| C22:6 | 38 | 26 |
| C22:other | 2 | 2 |
| C24:0 | 0 | 0 |

Table 16

| Carbon number data for example V | | |
|---|---|---|
| Carbon number | D40 / BO68 (blend) | in (D40 / BO68) |
| C42 | 0.3 | 0.4 |
| C44 | 1.9 | 1.2 |
| C46 | 1.7 | 1.9 |
| C48 | 1.8 | 2.2 |
| C50 | 4.9 | 6.0 |
| C52 | 14.0 | 12.0 |
| C54 | 27.9 | 19.0 |

Table 16   (continued)

| Carbon number data for example V | | |
|---|---|---|
| Carbon number | D40 / BO68 (blend) | in (D40 / BO68) |
| C56 | 10.5 | 17.4 |
| C58 | 10.4 | 19.7 |
| C60 | 10.7 | 9.5 |
| C62 | 9.0 | 9.2 |
| C64 | 3.8 | 1.6 |
| C66 | 3.1 | 0.0 |
| C68 | 0.0 | 0.0 |
| Total | 100.0 | 100.1 |

Table 17

| N-values for blends example VI | | | | | |
|---|---|---|---|---|---|
| Application | Blend | N-5 n.s. (%) | N-10 n.s. (%) | N-20 n.s. (%) | N-35 n.s. (%) |
| Chocolate | Typical values | 85 -95 | 80 -95 | 55 -65 | < 1 |
| | 99/1 CCB / in (D40/BO68) | 89.7 | 86.2 | 60.3 | 0.0 |
| Bakery | Typical values | 40 -80 | 30 -75 | 20 -45 | < 15 |
| | 40/50/10 POf37 / dfPOf / in(D40/BO68) | 61.5 | 43.9 | 25.7 | 0.4 |
| Ice cream coatings | Typical values | 65 -90 | > 35 | > 15 | < 1 |
| | 90/5/5 CN / CNs / in (D40/BO68) | 76.4 | 63.2 | 36.0 | 0.1 |
| Ice cream | Typical values | 40 -60 | | 15 -30 | < 5 |
| | 90/10 PO/in (D40/BO68) | 52.3 | | 22.8 | 4.2 |
| Non dairy creams | Typical values | 1 - 70 | | 0 - 37 | 0 - 11 |
| | 40/40/20 nPOm / dfPOf / in(D40/BO68) | 55.5 | | 15.2 | 0.0 |
| Health margarines/ Health spreads | Typical values | 7 - 20 | | 3 - 12 | < 2.5 |
| | 13/77/10 HS1 / SF / in (D40/BO68) | 18.9 | | 11.9 | 2.5 |
| Confectione ry filling | Typical values | > 50 | > 40 | > 25 | < 1.5 |
| | 60/20/20 nPOm / dfPOf / in(D40/BO68) | 65.6 | 55.4 | 32.9 | 1.2 |
| Mayonnaise / Sauces | Typical values | 0 - 10 | 0 - 5 | < 1 | < 0.5 |
| | 90/10 SF/in (D40/BO68) | 1.0 | 0.7 | 0.4 | 0.1 |
| Dressings | Typical values | 0 - 10 | 0 - 5 | < 1 | < 0.5 |
| | 90/10 SF/in (D40/BO68) | 1.0 | 0.7 | 0.4 | 0.1 |

Table 18

| FAME data for example VII. | | |
|---|---|---|
| FAME | wf (TUNA) f/POs | wf (TUNA) f/BO68 |
| C12:0 | 0.1 | 0.1 |
| C14:0 | 1.9 | 1.7 |
| C14:other | 0.6 | 0.6 |
| C16:0 | 24.7 | 6.9 |
| C16:1 | 5.3 | 5.3 |
| C16:other | 2.8 | 2.8 |
| C18:0 | 1.8 | 24.5 |
| C18:1 | 15.1 | 12.8 |
| C18:2 | 2.0 | 1.4 |
| C18:3 | 0.8 | 0.8 |
| C18:4 | 1.1 | 1.0 |
| C18:other | 0.8 | 0.8 |
| C20:0 | 0.1 | 0.2 |
| C20:1 | 0.9 | 0.8 |
| C20:2 | 0.2 | 0.2 |
| C20:3 | 0.2 | 0.2 |
| C20:4 | 1.9 | 1.9 |
| C20:5 | 6.8 | 6.7 |
| C20 other | 0.9 | 0.7 |
| C22:0 | 0.0 | 0.1 |
| C22:1 | 0.3 | 0.2 |
| C22:5 | 1.3 | 1.3 |
| C22:6 | 28.0 | 26.7 |
| Other C22 | 2.5 | 2.3 |

Table 19

| Carbon number data for example VII. | | | | |
|---|---|---|---|---|
| Carbon Number (area%) | wf (TUNA) f / POs | | wf (TUNA) f / BO68 | |
| | Blend | Interesterified blend | Blend | Interesterified blend |
| C42 | 0.6 | 0.8 | 0.2 | 0.6 |
| C44 | 0.2 | 1.1 | 0.5 | 1.0 |
| C46 | 2.1 | 2.0 | 0.7 | 1.2 |
| C48 | 19.3 | 6.2 | 2.1 | 2.3 |
| C50 | 10.5 | 12.7 | 4.4 | 7.8 |
| C52 | 7.9 | 12.3 | 13.4 | 11.9 |
| C54 | 9.3 | 17.3 | 28.0 | 17.2 |

Table 19   (continued)

| Carbon number data for example VII. | | | | |
|---|---|---|---|---|
| Carbon Number (area%) | wf (TUNA) f / POs | | wf (TUNA) f / BO68 | |
| | Blend | Interesterified blend | Blend | Interesterified blend |
| C56 | 12.2 | 15.7 | 12.8 | 18.4 |
| C58 | 13.4 | 11.7 | 14.3 | 17.8 |
| C60 | 12.9 | 11.8 | 12.3 | 10.9 |
| C62 | 8.0 | 5.7 | 8.1 | 8.4 |
| C64 | 3.5 | 2.7 | 3.2 | 2.5 |

Table 20

| Evaluation results of example IX | | |
|---|---|---|
| OIL | VISCOSITY cP | SAUTER MEAN PARTICLE DIAMETER µM |
| Reference | 5940 | 19.30 |
| Sunflower oil / in(D40/BO68) 90/10 | 5580 | 16.01 |

**Claims**

1. Triglyceride-composition, comprising at least two long chain poly-unsaturated fatty acids $L_1$ and $L_2$, both having at least 3 unsaturations and having at least 20 carbon atoms from which $L_1$ is the most abundant and $L_2$ is the second most abundant, wherein the triglyceride composition contains at least 20 wt% of $L_1$, while the weight ratio $L_1:L_2$ is at least 2, and the triglyceride composition also contains at least 15 wt%, of saturated fatty acids with 14 or more carbon atoms and wherein the weight ratio of saturated $C_{18}$ : saturated $C_{16}$ fatty acid residues is > 2, whereas at least 5 wt%, preferably at least 10 wt%, most preferably at least 20 wt% of the saturated $C_{14}+$ fatty acid residues is bonded on a triglyceride molecule, wherein at least $L_1$ and/or $L_2$ is present.

2. Triglyceride composition according to claim 1, wherein the amount of $L_1$ is more than 30 wt%, while the weight ratio $L_1:L_2$ is at least 3.

3. Triglyceride composition according to claims 1 or 2, wherein the amount of $L_1$ is at least 40 wt% and the weight ratio of $L_1:L_2$ is at least 3.5.

4. Triglyceride composition according to claims 1 - 3, wherein the amount of saturated $C_{14}+$ fatty acids is 15-50 wt%.

5. Triglyceride composition according to claims 1 - 3, wherein the amount of $C_{16}$-$C_{18}$ saturated fatty acids is more than 30 wt%, in particular more than 40 wt%.

6. Triglyceride composition according to claims 1 - 3, wherein the amount of $C_{18}$ saturated fatty acid is more than 20 wt%, preferably more than 30 wt%.

7. Triglyceride composition according to claims 1 - 6, wherein $L_1$ = DHA (= $C_{22:6}$).

8. Triglyceride composition according to claims 1 - 7, wherein $L_2$ = EPA (= $C_{20:5}$).

9. Triglyceride composition according to claims 1 - 6, wherein $L_1$ = EPA and $L_2$ = DHA.

10. Blends of triglycerides comprising:

| 0.3 - 95 wt% | of triglycerides according to claims 1 - 9, and |
|---|---|

(continued)

| 99.7 - 5 wt% | of a complementary fat, having a solid fat index at 10°C ($N_{10}$) that is either at least 5% more, or at least 5% less than the $N_{10}$ of the triglycerides according to claims 1- 9. |
|---|---|

11. Blends of triglycerides, according to claim 10, comprising 5-80 wt%, in particular 20-70 wt% of the triglycerides according to claims 1 - 9, and 95 - 20 wt%, in particular 80-30 wt% of the complementary fat.

12. Blends according to claims 10 - 11, wherein the complementary fat has a solid fat content (NMR-pulse; not stabilized) of more than 15 at 20°C, preferably more than 20.

13. Blends according to claims 10 - 12, wherein the complementary fat is selected from cocoa butter equivalents, cocoa butter, palm oil or fractions thereof, palmkernel oil or fractions thereof, interesterified mixtures of above fats or fractions or hardened components thereof, or from liquid oils, such as sunflower oil, high oleic sunflower oil, soyabean oil, rapeseed oil, cottonseed oil, maize oil, safflower oil, high oleic safflower oil or MCT oils.

14. Blends according to claims 10 - 13, wherein the blend displays a solid fat content (NMR-pulse; not stabilized) of 0-85, preferably 10 - 70, most preferably 20 - 60 at 5°C and less than 30, preferably < 20, most preferably < 5 at 35°C.

15. Triglyceride compositions or blends containing them, according to claims 1 - 14, wherein the compositions or the blends contain an effective amount of an oxidation stabilizer, selected from the group consisting of: natural or synthetic tocopherols, BHT, BHA, free radical scavengers, enzymes with anti-oxidant properties.

16. Food products, comprising a fat phase, such as spreads, margarine, cream alternative, infant food, chocolate, confectionery, bakery products, sauces, ice-creams, ice-cream coatings, cheese, soups, mayonnaise, dressings, enteral or parental products, wherein the fat phase contains a fat according to claims 1 - 15.

**Patentansprüche**

1. Triglyceridzusammensetzung, umfassend mindestens zwei langkettige polyungesättigte Fettsäuren $L_1$ und $L_2$, beide mit mindestens 3 Unsättigungen und mindestens 20 C-Atomen, von welchen $L_1$ am häufigsten vorliegt und $L_2$ am zweithäufigsten vorliegt, worin die Triglyceridzusammensetzung mindestens 20 Gew.-% $L_1$ enthält, während das Gewichtsverhältnis $L_1$:$L_2$ mindestens 2 beträgt und die Triglyceridzusammensetzung ferner mindestens 15 Gew.-% gesättigter Fettsäuren mit 14 oder mehr Kohlenstoffatomen enthält und worin das Gewichtsverhältnis von gesättigten $C_{18}$- : gesättigten $C_{16}$-Fettsäureresten > 2 ist, während mindestens 5 Gew.-%, vorzugsweise mindestens 10 Gew.-%, insbesondere mindestens 20 Gew.-%, der gesättigten $C_{14+}$-Fettsäurereste an ein Triglyceridmolekül gebunden sind, worin mindestens $L_1$ und/oder $L_2$ vorliegen.

2. Triglyceridzusammensetzungen nach Anspruch 1, worin die Menge an $L_1$ mehr als 30 Gew.-% beträgt, während das Gewichtsverhältnis $L_1$:$L_2$ mindestens 3 beträgt.

3. Triglyceridzusammensetzung nach den Ansprüchen 1 oder 2, worin die Menge an $L_1$ mindestens 40 Gew.-% beträgt und das Gewichtsverhältnis $L_1$:$L_2$ mindestens 3,5 ist.

4. Triglyceridzusammensetzung nach den Ansprüchen 1 bis 3, worin die Menge an gesättigten $C_{14+}$-Fettsäuren 15 bis 50 Gew.-% beträgt.

5. Triglyceridzusammensetzung nach den Ansprüchen 1 bis 3, worin die Menge an $C_{16}$-$C_{18}$-gesättigten Fettsäuren mehr als 30 Gew.-%, insbesondere mehr als 40 Gew.-%, beträgt.

6. Triglyceridzusammensetzung nach den Ansprüchen 1 bis 3, worin die Menge an $C_{18}$-gesättigten Fettsäuren mehr als 20 Gew.-%, vorzugsweise mehr als 30 Gew.-%, beträgt.

7. Triglyceridzusammensetzung nach den Ansprüchen 1 bis 6, worin $L_1$ = DHA (= $C_{22:6}$) ist.

8. Triglyceridzusammensetzung nach den Ansprüchen 1 bis 7, worin $L_2$ = EPA (= $C_{20:5}$) ist.

**9.** Triglyceridzusammensetzung nach den Ansprüchen 1 bis 6, worin $L_1$ = EPA und $L_2$ = DHA sind.

**10.** Triglyceridgemische, umfassend:

| 0,3 bis 95 Gew.-% | Triglyceride gemäß den Ansprüchen 1 bis 9 und |
|---|---|
| 99,7 bis 5 Gew.-% | eines komplementären Fettes mit einem Festfettindex bei 10°C ($N_{10}$), der entweder mindestens 5% größer oder mindestens 5% kleiner als der $N_{10}$ der Triglyceride gemäß den Ansprüchen 1 bis 9 ist. |

**11.** Gemische von Triglyceriden gemäß Anspruch 10, umfassend 5 bis 80 Gew.-%, insbesondere 20 bis 70 Gew.-%, der Triglyceride gemäß den Ansprüchen 1 bis 9 und 95 bis 20 Gew.-%, insbesondere 80 bis 30 Gew.-%, des komplementären Fettes.

**12.** Gemische nach den Ansprüchen 10 bis 11, worin das komplementäre Fett einen Festfettgehalt (NMR-Impuls, nicht stabilisiert) von mehr als 15 bei 20°C, vorzugsweise mehr als 20, aufweist.

**13.** Gemische gemäß den Ansprüchen 10 bis 12, worin das komplementäre Fett ausgewählt ist aus Kakaobutteräquivalenten, Kakaobutter, Palmöl oder Fraktionen davon, Palmkernöl oder Fraktionen davon, interesterifizierten Mischungen der obigen Fette oder Fraktionen oder gehärteten Komponenten davon, oder aus flüssigen Ölen, wie Sonnenblumenöl, Sonnenblumenöl mit hohem Ölsäuregehalt, Sojaöl, Rapsöl, Baumwollsamenöl, Maisöl, Safloröl, Safloröl mit hohem Ölsäuregehalt oder MCT-Ölen.

**14.** Gemische nach den Ansprüchen 10 bis 13, worin das Gemisch einen Festfettgehalt (NMR-Impuls, nicht stabilisiert) von 0 bis 85, vorzugsweise 10 bis 70, insbesondere 20 bis 60, bei 5°C und weniger als 30, vorzugsweise < 20, insbesondere < 5, bei 35°C zeigen.

**15.** Triglyceridzusammensetzungen oder sie enthaltende Gemische gemäß den Ansprüchen 1 bis 14, worin die Zusammensetzungen oder die Gemische eine wirksame Menge eines Oxidationsstabilisators, ausgewählt aus der aus natürlichen oder synthetischen Tocopherolen, BHT, BHA, Radikalfängern, Enzymen mit Antioxidationseigenschaften bestehenden Gruppe, enthalten.

**16.** Eine Fettphase umfassende Nahrungsprodukte, wie Aufstriche, Margarine, Sahnealternative, Kindernahrung, Schokolade, Süßwaren, Backwaren, Soßen, Eiskrems, Eiskrembeschichtungen, Käse, Suppen, Mayonnaise, Dressings, enterale oder parenterale Produkte, worin die Fettphase ein Fett gemäß den Ansprüchen 1 bis 15 enthält.

**Revendications**

**1.** Composition de triglycérides contenant au moins deux acides gras polyinsaturés à chaîne longue $L_1$ et $L_2$ ayant tout deux au moins trois insaturations et ayant au moins 20 atomes de carbone parmi lesquels $L_1$ est le plus abondant et $L_2$ est le deuxième plus abondant, dans laquelle la composition de triglycérides contient au moins 20 % en masse de $L_1$, cependant que le rapport en masse entre $L_1$ et $L_2$ est d'au moins 2, et la composition de triglycérides contient également au moins 15 % en masse d'acides gras saturés avec 14 atomes de carbone ou plus et dans lequel le rapport en masse entre les résidus d'acides gras saturés en $C_{18}$ et les résidus d'acides gras saturés en $C_{16}$ est inférieur à 2, cependant que au moins 5 % en masse, de préférence au moins 20 % en masse des résidus d'acides gras saturés en $C_{14+}$ sont liés sur une molécule de triglycéride, dans laquelle au moins L1 et/ou L2 est présent.

**2.** Composition de triglycérides selon la revendication 1, dans laquelle la quantité de $L_1$ est supérieure à 30 % en masse alors que le rapport en masse entre $L_1$ et $L_2$ est d'au moins 3.

**3.** Composition de triglycérides selon la revendication 1 ou 2, dans laquelle la quantité de $L_1$ est d'au moins 40 % en masse et le rapport en masse entre $L_1$ et $L_2$ est d'au moins 3,5.

**4.** Composition de triglycérides selon les revendications 1 - 3, dans laquelle la quantité d'acides gras saturés en $C_{14+}$ est de 15 - 50 % en masse.

**5.** Composition de triglycérides selon les revendications 1 - 3, dans laquelle la quantité d'acides gras saturés en $C_{16}$ - $C_{18}$ est supérieure à 30 % en masse, plus particulièrement inférieure à 40 % en masse.

**6.** Composition de triglycérides selon les revendications 1 - 3, dans laquelle la quantité d'acide gras saturé en $C_{18}$ est supérieure à 20 % en masse, de préférence supérieure à 30 % en masse.

**7.** Composition de triglycérides selon les revendications 1 - 6, dans laquelle $L_1$ = DHA (= $C_{22:6}$).

**8.** Composition de triglycérides selon les revendications 1 - 7, dans laquelle $L_2$ = EPA (= $C_{20:6}$).

**9.** Composition de triglycérides selon les revendications 1 - 6, dans laquelle $L_1$ = EPA et $L_2$ = DHA.

**10.** Mélanges de triglycérides comprenant :

de 0,3 0 95 % en masse de triglycérides selon l'une des revendications 1 - 9, et
de 99,7 à 5 % en masse d'une matière grasse complémentaire ayant un indice de graisse solide à 10°C ($N_{10}$) qui est soit au moins 5 % supérieur, ou au moins 5 % inférieur à 1a valeur $N_{10}$ des triglycérides selon les revendications 1 à 9.

**11.** Mélanges de triglycérides selon la revendication 10, comprenant de 5 à 80 % en masse, plus particulièrement de 20 à 70 % en masse de triglycérides selon les revendications 1 - 9, et 95 - 20 % en masse, plus particulièrement 80 - 30 % en masse, de la matière grasse complémentaire.

**12.** Mélanges selon les revendications 10 - 11, dans lesquels la matière grasse complémentaire a une teneur en matière grasse solide (impulsions RMN - non stabilisé) supérieur à 15 à 20°C, de préférence supérieur à 20.

**13.** Mélanges selon l'une des revendications 10 à 12, dans lesquels la matière grasse complémentaire est sélectionnée à partir des équivalents du beurre de cacao, du beurre de cacao, de l'huile de palme ou de fractions de celle-ci, d'huile de palmiste ou de fractions de celle-ci, de mélanges inter-estérifiés des matières grasses ci-dessus ou des fractions ou des composants durcis de celles-ci, ou à partir d'huiles liquides telles que l'huile de tournesol, l'huile de tournesol hautement oléique, l'huile de soja, l'huile de colza, l'huile de graines de coton, l'huile de maïs, l'huile de carthame, l'huile de carthame hautement oléique ou les huiles MCT.

**14.** Mélanges selon l'une des revendications 8 - 13, dans lesquels le mélange a une teneur en matière grasse solide (impulsion RMN ; stabilisé) de 0 - 85, de préférence 10 - 70, de façon plus préférentielle 20 - 60 à 5°C et inférieur à 30, de préférence inférieur à 20 et de la façon la plus préférentielle inférieur à 5 à 35°C.

**15.** Compositions de triglycérides ou mélanges les contenant selon l'une des revendications 1 à 14, dans lesquelles les compositions ou les mélanges les contenant contiennent une quantité efficace d'un stabilisateur d'oxydation sélectionné à partir du groupe composé de: tocophérols naturels ou synthétiques, BHT, BHA, des fixateurs de radicaux libres, des enzymes ayant des propriétés antioxydantes.

**16.** Produits alimentaires comprenant une phase grasse, tels que des pâtes à tartiner, de la margarine, des produits de substitution de la crème, des aliments pour bébés, du chocolat, des bonbons, des produits de pâtisserie, des sauces, des crèmes glacées, des enrobages de crèmes glacées, du fromage, des soupes, de la mayonnaise, des vinaigrettes, des produits destinés à être administrés par voie entérale ou parentérale, et dans lesquels la phase grasse contient une matière grasse selon l'une des revendications 1 à 15.